# FASCICULE DE BREVET EUROPEEN

(11) **EP 0 524 891 B1**
(45) Date de publication et mention de la délivrance du brevet: **17.06.1998**
(21) Numéro de dépôt: 92402149.6
(22) Date de dépôt: 24.07.1992
(51) Int. Cl.: H04N 1/32

(54) **Télécopieur perfectionné à fonctionnement dans l'un ou l'autre de plusieurs modes**
Auf mehrere Arten arbeitendes Faksimilegerät
Facsimile apparatus functioning in one or another of several modes

(30) Priorité: 25.07.1991 FR 9109422
(43) Date de publication de la demande: 27.01.1993
(73) Titulaire: SOCIETE D'APPLICATIONS GENERALES D'ELECTRICITE ET DE MECANIQUE SAGEM, F-75783 Paris Cédex 16 (FR)
(72) Inventeur: Alos, Rafael, F-95520 Osny (FR)
(74) Mandataire: Bloch, Gérard

(56) Documents cités:
- EP-A- 0 412 461
- PATENT ABSTRACTS OF JAPAN vol. 9, no. 126 (E-318)(1849) 31 Mai 1985 & JP-A-60 014 569
- PATENT ABSTRACTS OF JAPAN vol. 15, no. 233 (E-1077)(4761) 14 Juin 1991 & JP-A-3 068 264
- PATENT ABSTRACTS OF JAPAN vol. 15, no. 319 (E-1100)(4847) 14 Août 1991 & JP-A-3 117 266
- PATENT ABSTRACTS OF JAPAN vol. 6, no. 234 (E-143)(1112) 20 Novembre 1982 & JP-A-57 133 758

## Description

L'invention concerne un télécopieur agencé pour fonctionner aussi bien en mode G₄ qu'en mode G₃.

Le mode G₄ est caractérisé par une transmission numérique rapide à 64 kbits/s et donc d'un prix de revient intéressant, le mode G₃ est caractérisé par une transmission analogique beaucoup plus lente, à une vitesse au plus égale à 9,6 kbits/s. Le mode G₄ est naturellement préféré au mode G₃ quand le choix est possible.

Le réseau téléphonique commuté, classique, RTC, ou "public switched telephone network" (PSTN), est un réseau de transmission de données, analogiques. Le réseau d'appellation TRANSCOM, en France, est un réseau de transmission de données numériques à commutation de circuits ou "circuit switched data network" (CSDN).

Le réseau d'appellation NUMERIS, en France, est un réseau numérique à intégration de services RNIS, ou "integrated services digital network" ( ISDN), permettant la transmission de données aussi bien analogiques que numériques.

Les réseaux PSTN, CSDN et ISDN sont interconnectés.

Un télécopieur G₃ limité au mode G₃ peut être relié au réseau PSTN directement par une liaison PSTN et au réseau ISDN par l'ensemble d'une liaison PSTN, d'un module d'adaptation PSTN/ISDN et d'une liason ISDN. Un télécopieur G₄ limité au mode G₄ peut être relié au réseau CSDN directement par une liaison CSDN et au réseau ISDN par l'ensemble d'une liaison CSDN, d'un module d'adaptation CSDN/ISDN et d'une liaison ISDN. Un télécopieur G₄/G₃ agencé pour fonctionner en mode G₄ ou G₃ est de préférence relié au réseau ISDN directement par une liaison ISDN, dite native, mais, plus généralement, il est relié soit à ce réseau ISDN indirectement par deux liaisons à module d'adaptation comme deux télécopieurs G₃ et G₄ séparés, soit aux deux réseaux PSTN et CSDN respectivement par deux liaisons directes PSTN et CSDN.

Un télécopieur G₄/G₃ peut émettre vers un télécopieur G₄, relié au réseau CSDN, ou vers un télécopieur G₃, relié au réseau PSTN, ou encore vers un autre télécopieur G₄/G₃, relié au réseau ISDN, sous réserve que l'opérateur, préalablement à la transmission, ait défini le mode d'émission G₄ ou G₃.

Inversement, un télécopieur G₄/G₃ peut recevoir dans n'importe quel mode G₄ ou G₃ sans intervention de l'opérateur

Malheureusement, la signalisation aujourd'hui mise en oeuvre sur les réseaux interdit toute négociation du mode entre l'instant d'une tentative d'établissement de communication et l'établissement même de la communication.

Naturellement, l'opérateur d'un télécopieur G₄/G₃, qui ne connait pas le mode de fonctionnement du télécopieur récepteur, par simple ignorance ou par faute de renseignement, tente donc toujours, pour commencer, une émission en mode G₄, le plus performant comme rappelé ci-dessus, même si ce mode G₄ est le moins répandu.

En pratique, un télécopieur G₃/G₄ est préréglé en mode G₄ et ce n'est que sur commande de l'opérateur qu'il est commuté en mode G₃.

En définitive, il faut sélectionner un mode avant toute tentative d'établissement d'une communication, a priori le mode G₄ dans l'ignorance du mode de fonctionnement du télécopieur récepteur, et, en cas de défaut d'établissement de la communication, on peut faire une seconde tentative d'émission dans l'autre mode.

En pratique à nouveau, quand, ayant opté pour un mode d'émission, la tentative d'établissement de la communication échoue, on procède quasi-systématiquement à une seconde tentative dans l'autre mode (voir EP-A-0412461).

Or, et même s'il est fréquent qu'un télécopieur G₃ relié au réseau PSTN soit appelé en mode G₄, un défaut d'établissement d'une communication peut parfaitement provenir d'une cause autre qu'un défaut d'adaptation des modes de fonctionnement des deux télécopieurs émetteur et récepteur. En effet, les réseaux se comportent parfois de manière inattendue et même contraire aux normes et spécifications des protocoles. Des communications entre deux télécopieurs, l'un en mode G₄ et l'autre en mode G₃, ont ainsi déjà été constatées.

La présente invention vise à éviter, quand un appel a échoué dans l'un des deux modes G₄ et G₃, de réitérer systématiquement l'appel dans l'autre mode et donc à permettre de ne réitérer un appel après changement de mode qu'à bon escient ou presque.

La présente invention concerne un télécopieur perfectionné agencé pour fonctionner dans l'un ou l'autre de plusieurs modes, caractérisé par le fait qu'il comporte des moyens de détection d'un défaut de compatibilité des modes de fonctionnement du télécopieur perfectionné et d'un télécopieur classique appelé par l'intermédiaire d'au moins un réseau, par le télécopieur perfectionné ainsi que des moyens de changement de mode commandés par les moyens de détection.

Grâce à l'invention, on évite de réitérer un appel dans un mode autre que celui dans lequel il doit quand même réussir.

La norme Q931 du CCITT définit un protocole d'échanges de données de signalisation entre un télécopieur et un réseau et de données de communication entre deux télécopieurs. Ce protocole définit un grand nombre de situations auxquelles correspondent des caractères de codage. A un défaut de compatibilité des modes de fonctionnement d'un télécopieur appelant et d'un télécopieur appelé correspondent encore de nombreux caractères de codage d'erreur.

Dans la forme de réalisation préférée du télécopieur de l'invention, les moyens de détection sont agencés pour ne détecter que des caractères de codage d'erreur d'un protocole d'échanges correspondant à un défaut de compatibilité des modes de fonctionnement, qui puissent être transmis par le réseau avec une bonne fiabilité, totale, c'est-à-dire sans perte de signalisation, ou quasi-totale.

Les moyens de détection peuvent être agencés pour détecter les caractères de codage d'erreur émis sans perte de signalisation, avant tout établissement d'une communication entre le télécopieur perfectionné et le télécopieur classique, lorsque
- le télécopieur classique est relié à un réseau ISDN et qu'il est appelé par le télécopieur perfectionné dans un mode G₄ différent de son mode G₃,
- le télécopieur classique est appelé par le télécopieur perfectionné dans un mode impossible.

Dans le premier cas, il s'agit d'un télécopieur G₃ relié au réseau ISDN et appelé en G₄ par le télécopieur perfectionné. Si on considère la norme Q931 du CCITT, le télécopieur perfectionné reçoit du réseau un code 12.

Dans le deuxième cas, il peut s'agir d'un appel, par le télécopieur perfectionné en mode G₄, d'un numéro PSTN.

Selon la norme Q931, le télécopieur perfectionné reçoit du réseau l'un des cinq codes 41, 58, 71, 39 et 3A.

Les moyens de détection peuvent aussi être agencés pour détecter les caractères de codage d'erreur émis, après établissement d'une communication entre le télécopieur perfectionné et le télécopieur classique mais, quand à l'issue d'une tentative d'établissement d'une phase, correspondant à des couches logiques intermédiaires d'analyse, d'impression et de communication, de la communication considérée dans son ensemble, la communication s'interrompt.

L'établissement de cette phase est relativement très fiable, puisqu'il n'intervient qu'après dix tentatives et le défaut d'établissement de cette phase de la communication, après ces dix tentatives, implique presque avec certitude qu'il s'agit d'une tentative de communication entre le télécopieur perfectionné en mode G₄ et un télécopieur G₃ relié au réseau PSTN.

Les moyens de détection peuvent encore être agencés pour détecter les caractères de codage d'erreur émis quand la communication s'interrompt avant la fin de la tentative d'établissement de la phase des couches logiques intermédiaires de la communication, ce qui implique la même situation que précédemment.

Finalement, les moyens de détection du télécopieur perfectionné de l'invention permettent, dans un maximum de situations possibles, d'analyser très finement les réponses du réseau provoquées par des appels engagés dans un mauvais mode.

Dans l'un ou l'autre des quatre cas d'échec ci-dessus, et dans aucun autre, l'opérateur du télécopieur de l'invention réitère systématiquement et à bon escient un appel en mode G₃, après l'avoir d'abord et en vain engagé en mode G₄.

Plus généralement, le télécopieur de l'invention, grâce à ses moyens de détection, permet de discriminer, d'une série de situations se traduisant par un défaut d'établissement de communication, des situations, prédéfinies et en nombre limité qui justifient, après une première tentative avortée d'établissement d'une communication, une seconde tentative avec changement de mode.

L'invention sera mieux comprise à l'aide de la description suivante du télécopieur perfectionné de cette invention, en référence au dessin annexé, sur lequel
- la figure 1 représente la structure matérielle schématique du télécopieur, et
- la figure 2 représente l'organigramme des logiciels de détection de défaut de compatibilité des modes de fonctionnement et de changement de mode.

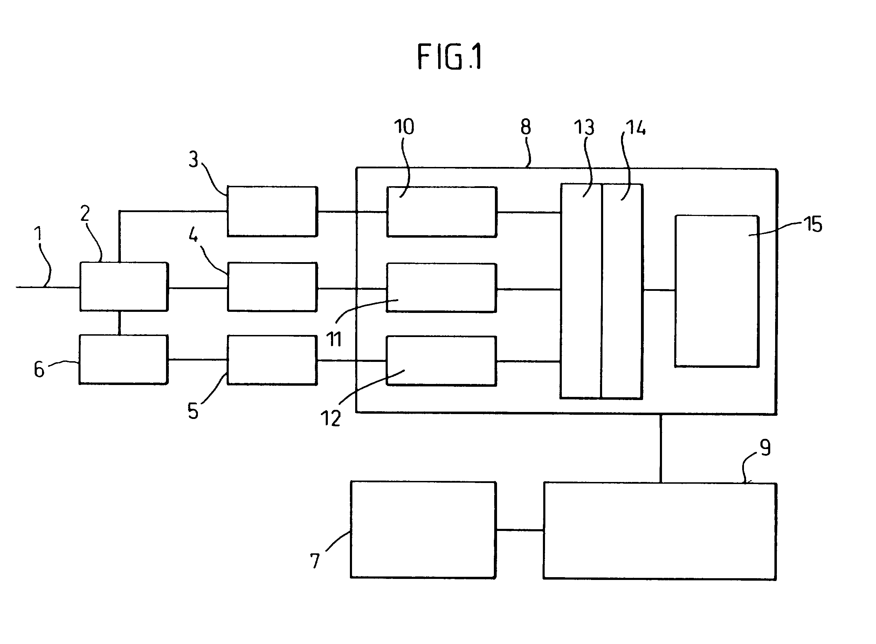

Le télécopieur de l'invention, en référence à la figure 1, comporte, outre des composants classiques parfaitement connus de l'homme du métier et qui ne seront pas ici décrits, comme un scanner et une imprimante, une liaison ISDN à quatre fils 1, pour un canal de signalisation et deux canaux G₄ et G₃ de communication, un multiplexeur-démultiplexeur 2 relié à trois sérialisateurs-désérialisateurs 3, 4, 5, aux deux premiers 3, 4, pour le canal de signalisation et le canal G₄ de communication, directement et, au dernier 5, pour le canal G₃ de communication, par l'intermédiaire d'un modem 6.

Le télécopieur comporte encore une mémoire centrale de travail 7 et un disque dur de logiciels 8.

Tous ces composants sont reliés par bus à un microprocesseur 9.

Sur le disque dur 8 sont stockés un logiciel de signalisation 10, un logiciel 11 de communication G₄, un logiciel 12 de communication G₃, un logiciel 13 de détection de défaut de compatibilité de modes de fonctionnement, un logiciel 14 de changement de mode, des couches 15 de logiciels intermédiaires d'analyse, d'impression et de communication ainsi que des couches externes, non représentées, de logiciels de gestion et d'application.

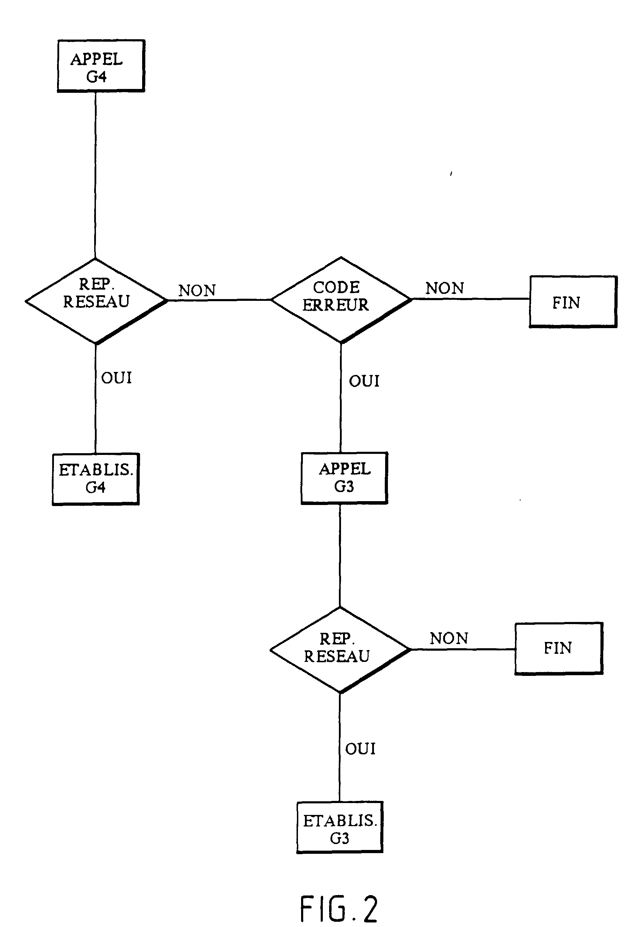

En référence à la figure 2, en cas d'appel en mode G₄ d'un télécopieur classique, le réseau ISDN, par l'intermédiaire de la liaison 1, valide l'appel (OUI), et la communication s'établit en mode G₄, ou émet des caractères de codage d'erreur (NON).

Si le logiciel de détection 13 ne détecte pas l'un des défauts de compatibilité des modes de fonctionnement prédéfinis (NON), la tentative d'établissement de la communication prend fin, au moins provisoirement, jusqu'à la détermination du défaut d'établissement de la communication (FIN). Si au contraire le logiciel de détection 13 détecte l'un des défauts de compatibilité des modes de fonctionnement prédéfinis (OUI), le logiciel de changement de mode 14, commandé par le logiciel 13, provoque un nouvel appel en mode G₃. Si le réseau valide l'appel (OUI), la communication s'établit en mode G₃. Si le réseau ne valide pas l'appel (NON), la tentative d'établissement de la communication prend fin provisoirement (FIN).

## Revendications

1. Télécopieur perfectionné agencé pour fonctionner dans l'un ou l'autre de plusieurs modes, caractérisé par le fait qu'il comporte des moyens (13) de détection d'un défaut de compatibilité des modes de fonctionnement du télécopieur perfectionné et d'un télécopieur classique appelé, par l'intermédiaire d'au moins un réseau (1), par le télécopieur perfectionné ainsi que des moyens (14) de changement de mode commandé par les moyens de détection (13).

2. Télécopieur perfectionné selon la revendication 1, dans lequel les moyens de détection (13) sont agencés pour ne détecter que des caractères de codage d'erreur d'un protocole d'échanges correspondant à un défaut de compatibilité des modes de fonctionnement, qui puissent être transmis par le réseau (1) avec une bonne fiabilité.

3. Télécopieur perfectionné selon la revendication 2, dans lequel les moyens de détection (13) sont agencés pour discriminer, d'une série de situations se traduisant par un défaut d'établissement de communication, des situations prédéfinies et en nombre limité qui justifient, après une première tentative avortée d'établissement d'une communication, une seconde tentative avec changement de mode.

4. Télécopieur perfectionné selon la revendication 3, dans lequel les moyens de détection (13) sont agencés pour détecter les caractères de codage d'erreur émis sans perte de signalisation, avant tout établissement d'une communication entre le télécopieur perfectionné et le télécopieur classique, lorsque le télécopieur classique est relié à un réseau ISDN et qu'il est appelé par le télécopieur perfectionné dans un mode G₄ différent de son mode G₃.

5. Télécopieur perfectionné selon l'une des revendications 3 et 4, dans lequel des moyens de détection (13) sont agencés pour détecter les caractères de codage d'erreur émis sans perte de signalisation, avant tout établissement d'une communication entre le télécopieur perfectionné et le télécopieur classique lorsque le télécopieur classique est appelé par le télécopieur perfectionné dans un mode impossible.

6. Télécopieur perfectionné selon l'une des revendications 3 à 5, dans lequel les moyens de détection (13) sont agencés pour détecter les caractères de codage d'erreur émis, après établissement d'une communication entre le télécopieur perfectionné et le télécopieur classique mais, quand, à l'issue d'une tentative d'établissement d'une phase, correspondant à des couches logiques intermédiaires (15) d'analyse, d'impression et de communication, de la communication considérée dans son ensemble, la communication s'interrompt.

7. Télécopieur perfectionné selon l'une des revendications 3 à 6, dans lequel les moyens de détection (13) sont agencés pour détecter les caractères de codage d'erreur émis quand une communication, entre le télécopieur perfectionné et le télécopieur classique s'interrompt avant la fin d'une tentative d'établissement d'une phase, correspondant à des couches logiques intermédiaires (15) d'analyse, d'impression et de communication, de la communication considérée dans son ensemble.

## Claims

1. Improved facsimile apparatus arranged for functioning in one or another of several modes, characterised by the fact that it comprises means (13) to detect a compatibility fault with the functioning modes of the improved facsimile apparatus and a classic facsimile apparatus called, by the intermediary of a network, by the improved facsimile apparatus as well as means (14) to change the mode, controlled by the detection means (13).

2. Improved facsimile apparatus according to claim 1, in which the detection means (13) are arranged to only detect error coding characters of an exchange protocol corresponding to a compatibility fault with the functioning modes which can be transmitted by the network (1) with good reliability.

3. Improved facsimile apparatus according to claim 2, in which the detection means (13) are arrranged to discriminate, in a series of situations which result in a communication establishment fault, pre-determined situations and in a limited number which justify, following an initial aborted attempt to establish communication, a second attempt with a mode change.

4. Improved facsimile apparatus according to claim 3 in which the detection means (13) are arranged to detect the error coding characters emitted without signal loss, prior to establishing any communication between the improved facsimile apparatus and the classic facsimile, apparatus when the classic facsimile apparatus is connected to an ISDN network and is called by the improved facsimile apparatus in a G4 mode which is different from its G3 mode.

5. Improved facsimile apparatus according to one of claims 3 and 4 in which the detection means (13) are arranged to detect the error coding characters emitted without signal loss, prior to establishing any communication between the improved facsimile apparatus and the classic facsimile apparatus when the classic facsimile apparatus is called by the improved facsimile apparatus in an impossible mode.

6. Improved facsimile apparatus according to one of claims 3 to 5, in which the detection means (13) are arranged to detect the emitted error coding characters after establishing communication between the improved facsimile apparatus and the classic facsimile apparatus but, when, following an attempt to establish a phase, corresponding to intermediary logical layers (15) of analysis, printing and communication, of the communication considered as a whole, the communication is interrupted.

7. Improved facsimile apparatus according to one of claims 3 to 6 in which the detection means (13) are arranged to detect the error coding characters emitted when a communication, between the improved facsimile apparatus and the classic facsimile apparatus is interrupted before the end of an attempt to establish a phase, corresponding to intermediary logical layers (15) of analysis, printing and communication, of the communication considered as a whole

## Patentansprüche

1. Weiterentwickeltes Facsimile-Gerät zum Betrieb in einem oder dem anderen mehrerer Modi, dadurch gekennzeichnet, daß es Mittel (13) zum Erkennen eines Kompatibilitätsfehlers zwischen den FunktionsModi des weiterentwickelten Facsimile-Gerätes und eines klassischen Facsimile-Gerätes das, mittels mindestens eines Netzes (1), durch das weiterentwickelte Facsimile-Gerät angewählt ist sowie Mittel (14) zum Ändern des Modus aufgrund von Anweisungen durch die Erkennungs-Mittel (13) umfaßt.

2. Weiterentwickeltes Facsimile-Gerät nach Anspruch 1, wobei die Erkennungsmittel (13) nur zur Erkennung der Zeichen einer Fehlercodierung eines Austauschprotokolls, die einem Kompatibilitätsfehler in den Funktionsmodi entsprechen, die durch das Netz (1) mit guter Zuverlässigkeit übermittelt werden können, eingerichtet sind.

3. Weiterentwickeltes Facsimile-Gerät nach Anspruch 2, wobei die Erkennungsmittel (13) zur Diskriminierung vorherbestimmter Situationen in begrenzter Zahl in einer Serie von Situationen, die sich über einen Fehler bei der Erstellung der Verbindung übermitteln, die nach einer ersten mißlungenen Verbindung einen zweiten Versuch mit geändertem Modus rechtfertigen, eingerichtet sind.

4. Weiterentwickeltes Facsimile-Gerät nach Anspruch 3, wobei die Erkennungs-Mittel (13) zur Erkennung der Zeichen der Fehlercodierung, die ohne Verlust der Signalübertragung gesendet werden, bevor irgendeine Verbindung zwischen dem weiterentwickelten Facsimile-Gerät und dem klassischen Facsimile-Gerät hergestellt wird und das klassische Facsimile-Gerät mit einem ISDN-Netz verbunden ist und durch das weiterentwickelte Facsimile-Gerät im G4-Modus, unterschiedlich von seinem G3-Modus, angerufen wird, eingerichtet sind.

5. Weiterentwickeltes Facsimile-Gerät nach irgendeinem der Ansprüche 3 und 4, wobei Erkennungsmittel (13) zur Erkennung der Zeichen der Fehlercodierung, die ohne Verlust der Signalübertragung gesendet werden, bevor irgendeine Verbindung zwischen dem weiterentwickelten Facsimile-Gerät und dem klassischen Facsimile-Gerät hergestellt wird, wenn das klassische Facsimile-Gerät durch das weiterentwickelte Facsimilegerät in einem unmöglichen Modus angerufen wird eingerichtet sind.

6. Weiterentwickeltes Facsimile-Gerät nach einem der Ansprüche 3 bis 5, wobei die Erkennungs-Mittel (13) zur Erkennung der Zeichen der Fehlercodierung, die, nach einer Verbindung zwischen dem weiterentwickelten Facsimile-Gerät und dem klassischen Facsimile-Gerät gesend werden aber wenn diese Verbindung, nach der Durchführung eines Versuchs der Erstellung einer Phase, entsprechend temporären Logikebenen (15) der Analyse, des Drucks und der Verbindung, der in ihrer Gesamtheit betrachtete Verbindung, unterbricht, eingerichtet sind.

7. Weiterentwickeltes Facsimile-Gerät nach irgendeinem der Ansprüche 3 bis 6, wobei die Erkennungs-Mittel (13) zur Erkennung der Zeichen der Fehlercodierung, die gesendet werden, wenn sich eine Verbindung Zwischen dem weiterentwickelten Facsimile-Gerät und einem klassischen Facsimile-Gerät sich, vor dem Ende eines Versuchs der Erstellung einer Phase, entsprechend den temporären Logikebenen (15) der Analyse, des Drucks und der Verbindung, der in ihrer Gesamtheit betrachtet Verbindung, unterbricht, eingerichtet sind.
